(19) Europäisches Patentamt
European Patent Office
Office européen des brevets

(11) EP 4 757 239 A1

(12) **DEMANDE DE BREVET EUROPEEN**

(43) Date de publication:
**10.06.2026 Bulletin 2026/24**

(21) Numéro de dépôt: **25215277.2**

(22) Date de dépôt: **12.11.2025**

(51) Classification Internationale des Brevets (IPC):
*H04L 9/08* (2006.01)   *H04L 9/32* (2006.01)
*H04L 9/00* (2022.01)   *G06F 21/32* (2013.01)
*G06F 21/34* (2013.01)

(52) Classification Coopérative des Brevets (CPC):
**G06F 21/34; G06F 21/32; H04L 9/0866;
H04L 9/0869; H04L 9/0897; H04L 9/3231;
H04L 9/3234; H04L 9/50**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: **06.12.2024 FR 2413603**

(71) Demandeur: **IDEMIA France
92400 Courbevoie (FR)**

(72) Inventeurs:
• **DOTTAX, Emmanuelle
92400 COURBEVOIE (FR)**
• **JULIEN, Manon
92400 COURBEVOIE (FR)**
• **VERN, Jonathan
92400 COURBEVOIE (FR)**
• **HEULOT, Christophe
92400 COURBEVOIE (FR)**

(74) Mandataire: **Idemia
Service IP / IST
2, place Samuel de Champlain
92400 Courbevoie (FR)**

(54) **SAUVEGARDE ET RÉCUPÉRATION D'UN SECRET PROUVANT UNE POSSESSION D ACTIFS NUMÉRIQUES**

(57) Procédé de sauvegarde d'un secret (seed) mémorisé par un jeton matériel tel qu'une carte à puce, le secret permettant de prouver une possession d'actifs numériques, le procédé comprenant les étapes suivantes mises en œuvre par le jeton matériel : chiffrement (108) d'un gabarit biométrique de référence mémorisé par le jeton matériel se rapportant à un individu de référence et du secret, de sorte à produire des données chiffrées ($c_1$, $c_2$) ; génération (112) d'une sauvegarde (BU) à partir des données chiffrées ; et envoi (114) de la sauvegarde à un dispositif distinct du jeton matériel.

Figure 3

EP 4 757 239 A1

## Description

## DOMAINE DE L'INVENTION

La présente invention concerne un procédé de sauvegarde d'un secret permettant de prouver une possession d'actifs numériques, et un procédé de récupération d'un tel secret sur la base d'une sauvegarde.

## ETAT DE LA TECHNIQUE

Les clés privées sont des secrets fondamentaux dans les systèmes de cryptomonnaie. Elles permettent aux utilisateurs de signer des transactions et de prouver leur propriété sur des actifs numériques. La sécurité de ces secrets est cruciale, car leur divulgation peut entraîner la perte des actifs numériques.

Il est connu de stocker ces clés de manière sécurisée dans des jetons matériels, parfois aussi appelés « portefeuilles matériels » dans ce contexte. Bien entendu, un utilisateur détenteur d'actifs numériques doit conserver précieusement son jeton matériel, puisqu'il en a besoin pour signer des transactions.

Or, si l'utilisateur perd ou se fait voler son jeton matériel, ou bien si le jeton matériel est endommagé, l'utilisateur ne peut plus réaliser des transactions. Par ailleurs, une clé privée n'est pas facile à mémoriser de tête, si bien que se pose le problème de sa récupération en l'absence du jeton matériel.

## EXPOSE DE L'INVENTION

Un problème technique à résoudre est celui de sauvegarder et récupérer de manière sécurisée un secret permettant de prouver une possession d'actifs numériques.

Ce problème technique est résolu par un procédé de sauvegarde d'un secret mémorisé par un jeton matériel tel qu'une carte à puce, le secret permettant de prouver une possession d'actifs numériques le procédé comprenant les étapes suivantes mises en œuvre par le jeton matériel : chiffrement d'un gabarit biométrique de référence mémorisé par le jeton matériel se rapportant à un individu de référence et du secret, de sorte à produire des données chiffrées ; génération d'une sauvegarde à partir des données chiffrées ; et envoi de la sauvegarde à un dispositif distinct du jeton matériel.

Le procédé de sauvegarde, qui constitue un premier objet, peut également comprendre les caractéristiques optionnelles suivantes, prises seules ou en combinaison.

De préférence, le procédé de sauvegarde comprend des étapes de : chiffrement du gabarit biométrique de référence de sorte à produire un premier chiffré, chiffrement du secret de sorte à produire un deuxième chiffré, et génération de la sauvegarde à partir du premier chiffré et du deuxième chiffré.

De préférence, le chiffrement du gabarit biométrique est réalisé à l'aide d'une première clé de chiffrement, et le chiffrement du secret est réalisé à l'aide d'une deuxième clé de chiffrement différente de la première clé de chiffrement.

De préférence, la première clé de chiffrement est générée par le jeton matériel à partir d'une première clé maître et à partir d'un premier diversifiant, et la deuxième clé de chiffrement est générée par le jeton matériel à partir d'une deuxième clé maître et à partir d'un deuxième diversifiant, chaque diversifiant étant inclus dans la sauvegarde.

De préférence, la deuxième clé maître est différente de la première clé maître, et le premier diversifiant et le deuxième diversifiant sont un seul et même diversifiant inclus dans la sauvegarde.

De préférence, au moins une clé parmi la première clé de chiffrement et la deuxième clé de chiffrement est générée à partir d'un code PIN saisi par l'individu de référence.

De préférence, la sauvegarde comprend un code d'authentification généré à partir des données chiffrées, le code d'authentification étant utilisable pour contrôler une intégrité de la sauvegarde.

De préférence, le code d'authentification est généré à l'aide d'une clé d'authentification différente de la première clé de chiffrement et de la deuxième clé de chiffrement.

De préférence, la clé d'authentification est générée à l'aide d'une clé maître du jeton matériel et à partir d'un diversifiant d'authentification, et le diversifiant d'authentification est inclus dans la sauvegarde.

De préférence, le premier diversifiant et le diversifiant d'authentification sont un seul et même diversifiant inclus dans la sauvegarde, ou le deuxième diversifiant et le diversifiant d'authentification sont un seul et même diversifiant inclus dans la sauvegarde.

De préférence, la sauvegarde est encodée sous la forme d'un code-barres bidimensionnel.

De préférence, le procédé de sauvegarde comprend en outre une étape de chiffrement de la sauvegarde générée à l'aide d'une clé publique propre à un serveur, de sorte à obtenir la sauvegarde générée sous une forme chiffrée, la sauvegarde envoyée au dispositif distinct du jeton matériel étant la sauvegarde générée sous la forme chiffrée.

Le problème technique est par ailleurs résolu par un procédé de récupération d'un secret permettant de prouver une possession d'actifs numériques, le procédé comprenant les étapes suivantes mise en œuvre par un jeton matériel tel qu'une carte à puce : réception d'une sauvegarde émanant d'un dispositif distinct du jeton matériel ; déchiffrement de la sauvegarde, de sorte à récupérer un gabarit biométrique sauvegardé et le secret ; acquisition d'un gabarit biométrique d'épreuve par un capteur biométrique du jeton matériel, le gabarit biométrique d'épreuve se rapportant à un individu ; vérification de correspondance entre le gabarit biométrique sauvegardé et le gabarit biométrique d'épreuve ; et mémorisation du secret dans une mémoire du jeton matériel, dans lequel le déchiffrement du secret ou la mémorisation du secret est réalisé à condition que la vérification révèle que le gabarit sauvegardé et le gabarit biométrique d'épreuve correspondent.

Le procédé de récupération, qui constitue un deuxième objet, peut également comprendre les caractéristiques optionnelles suivantes, prises seules ou en combinaison.

De préférence, le procédé de récupération comprend les étapes suivantes : déchiffrement d'un premier chiffré extrait de la sauvegarde, de sorte à récupérer le gabarit biométrique sauvegardé, et déchiffrement d'un deuxième chiffré extrait de la sauvegarde de sorte à récupérer le secret, dans lequel le déchiffrement du deuxième chiffré est réalisé à condition que la vérification révèle que le gabarit sauvegardé et le gabarit biométrique d'épreuve correspondent.

De préférence, le déchiffrement du premier chiffré est réalisé à l'aide d'une première clé de déchiffrement, et le déchiffrement du deuxième chiffré est réalisé à l'aide d'une deuxième clé de déchiffrement différente de la première clé de déchiffrement.

De préférence, la première clé de déchiffrement est générée par le jeton matériel à partir d'une première clé maître et à partir d'un premier diversifiant extrait de la sauvegarde, et la deuxième clé de chiffrement est générée par le jeton matériel à partir d'une deuxième clé maître et à partir d'un deuxième diversifiant extrait de la sauvegarde.

De préférence, la deuxième clé maître est différente de la première clé maître, et le deuxième diversifiant et le premier diversifiant sont un seul et même diversifiant présent dans la sauvegarde.

De préférence, au moins une clé parmi la première clé de déchiffrement et la deuxième clé de déchiffrement est générée à partir d'un code PIN d'épreuve saisi par l'individu.

De préférence, le procédé de récupération comprend en outre des étapes de contrôle d'intégrité de la sauvegarde à partir d'un code d'authentification extrait de la sauvegarde, et de blocage du jeton matériel à condition que le contrôle d'intégrité révèle que la sauvegarde n'est pas intègre, le blocage empêchant tout transfert des actifs numériques à l'aide du jeton matériel.

De préférence, le contrôle d'intégrité est mis en œuvre à l'aide d'une clé d'authentification différente de la première clé de déchiffrement et de la deuxième clé de déchiffrement.

De préférence, la clé d'authentification est générée par le jeton matériel à l'aide d'une clé maître mémorisée par le jeton matériel et à partir d'un diversifiant d'authentification extrait de la sauvegarde.

De préférence, le premier diversifiant et le diversifiant d'authentification sont un seul et même diversifiant présent dans la sauvegarde, ou le deuxième diversifiant et le diversifiant d'authentification sont un seul et même diversifiant présent dans la sauvegarde.

De préférence, le procédé de récupération comprend un traitement factice pour retarder la récupération du secret.

De préférence, le procédé de récupération comprend en outre les étapes suivantes mises en œuvre par un serveur : recevoir une sauvegarde sous une forme chiffrée à l'aide d'une clé publique propre au serveur ; déchiffrer la sauvegarde sous la forme chiffrée à l'aide d'une clé privée propre au serveur, de sorte à obtenir la sauvegarde ; à l'aide d'une clé publique propre au jeton matériel, rechiffrer la sauvegarde obtenue à l'issue du déchiffrement réalisé à l'aide de la clé privée propre au serveur, de sorte à obtenir la sauvegarde sous une forme rechiffrée. La sauvegarde reçue par le jeton matériel est la sauvegarde sous la forme rechiffrée. En outre, le procédé de récupération comprend l'étape suivante mise en œuvre par le jeton matériel : déchiffrer la sauvegarde sous la forme rechiffrée à l'aide d'une clé privée propre au jeton matériel, avant que le jeton matériel ne déchiffre la sauvegarde de sorte à récupérer le gabarit biométrique sauvegardé et le secret.

Un troisième objet est un procédé comprenant : une sauvegarde d'un secret mémorisé par un premier jeton matériel via le procédé de sauvegarde constituant le premier objet, le secret permettant de prouver une possession d'actifs numériques ; et une récupération du secret par un deuxième jeton matériel via le procédé de récupération constituant le deuxième objet.

Un quatrième objet est un produit programme d'ordinateur comprenant des instructions de code de programme pour l'exécution des étapes du procédé selon le premier objet, selon le deuxième objet ou selon le troisième objet, lorsque ce programme est exécuté par au moins un processeur.

Un cinquième objet est un jeton matériel, tel qu'une carte à puce, comprenant : une mémoire propre à mémoriser un secret permettant de prouver une possession d'actifs numériques ; une interface de communication pour communiquer avec un dispositif distinct du jeton matériel ; et au moins un processeur configuré pour sauvegarder le secret via le procédé de sauvegarde selon le premier objet, et/ou récupérer le secret via le procédé de récupération selon le deuxième objet.

**DESCRIPTION DES FIGURES**

D'autres caractéristiques, buts et avantages de l'invention ressortiront de la description qui suit, qui est purement illustrative et non limitative, et qui doit être lue en regard des dessins annexés sur lesquels :

La figure 1 et la figure 2 illustrent de façon schématique un système pour la sauvegarde et pour la récupération d'un secret, selon un mode de réalisation.

La figure 3 est un organigramme d'étapes d'un procédé de sauvegarde de secret, selon un mode de réalisation de l'invention.

La figure 4 est un organigramme d'étapes d'un procédé de récupération de secret, selon un mode de réalisation de l'invention.

La figure 5 est un organigramme d'étapes d'un procédé de sauvegarde de secret, selon un autre mode de réalisation de l'invention.

La figure 6 est un organigramme d'étapes d'un procédé de récupération de secret, selon un autre mode de réalisation de l'invention.

Sur l'ensemble des figures, les éléments similaires portent des références identiques.

## DESCRIPTION DETAILLEE DE L'INVENTION

### 1) Système

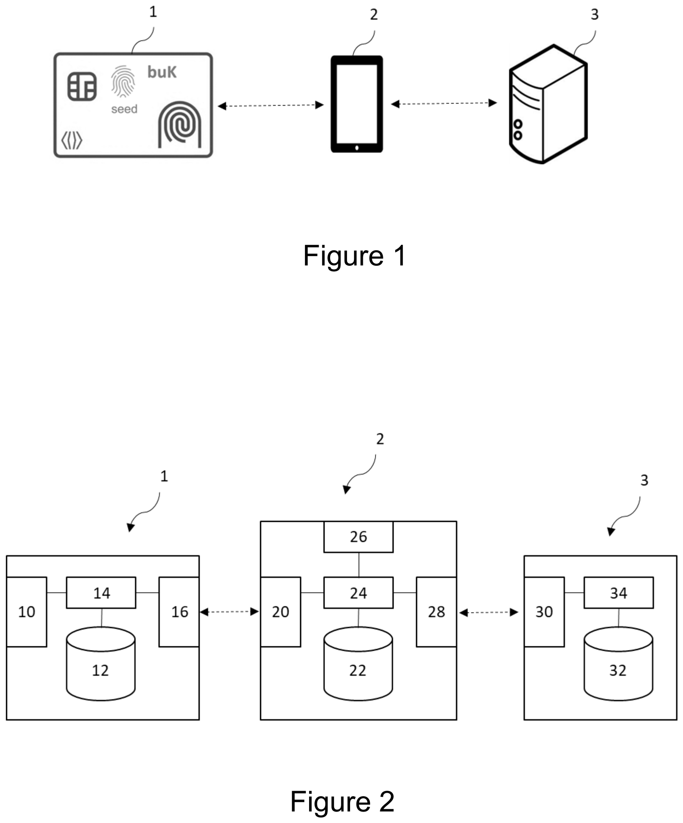

En référence à la **figure 1,** un système de sauvegarde et de restauration d'un secret, noté *seed,* comprend un jeton matériel 1, un terminal 2 et optionnellement un serveur 3.

Le secret *seed* a pour fonction de prouver la possession d'actifs numériques. Dans un mode de réalisation, les actifs numériques sont de la cryptomonnaie (par exemple des bitcoins), et le secret *seed* est utilisé pour dériver un nombre arbitraire de clés, ces clés étant utilisées pour réaliser des transactions. Une transaction de cryptomonnaie, en particulier une cession de cryptomonnaie, ne peut pas être réalisée sans connaître la clé privée associée.

### 1.1) Jeton matériel

En référence à la figure 2, le jeton matériel 1 comprend un capteur biométrique 10, une mémoire 12, un processeur 14 et une interface de communication 16.

Le capteur biométrique 10 est configuré pour générer un gabarit biométrique se rapportant à un individu qui possède le jeton matériel 1. Par exemple, le capteur biométrique 10 est un capteur d'empreinte digitale, présentant une surface sur laquelle l'utilisateur peut poser son doigt en vue de cette acquisition.

La mémoire 12 est une mémoire non-volatile ayant vocation à stocker le secret *seed* et d'autres données de manière persistante. De préférence, la mémoire 12 fait partie d'un élément sécurisé (on parle de « secure element » dans la littérature). Dans ce cas, la mémoire 12 est sécurisée contre la lecture et modification à l'aide de contremesures physiques.

En raison du stockage du secret *seed* dans sa mémoire 12, le jeton matériel 1 peut parfois être appelé « porte-monnaie matériel » (« hardware wallet » en anglais). Toutefois, il est à noter que les actifs numériques auxquels se rapportent le secret ne sont pas stockés en eux-mêmes par le jeton matériel 1 ; le jeton matériel 1 peut en effet se borner à stocker le droit de les utiliser (le secret). Par exemple, lorsque les actifs numériques sont de la cryptomonnaie, ils sont stockés dans une chaine de blocs (« blockchain »), qui est en réalité une base de données répartie sur plusieurs équipements réseau.

Parmi les autres données stockées dans la mémoire, on trouve des données maître *buK,* comprenant au moins une clé maître.

Le jeton matériel 1 peut faire partie d'une flotte de jetons matériels qui mémorisent les mêmes clés maître. Même si ces clés sont communes entre ces jetons matériels, elles constituent des données secrètes mémorisées dans les jetons matériels lors d'une configuration en usine, et n'ayant pas vocation à être communiquées à d'autres dispositifs lors de leur utilisation ultérieure.

La mémoire 12 stocke également un gabarit biométrique de référence *BioRef* se rapportant à un individu de référence, l'individu de référence est le détenteur légitime du jeton matériel 1.

Le gabarit biométrique de référence a été écrit dans la mémoire 12 lors d'une phase préalable d'enrôlement de l'individu de référence. On notera que ce gabarit biométrique de référence peut avoir été généré par le jeton matériel 1, typiquement par son processeur 14, à partir d'une ou plusieurs image(s) biométrique(s) acquise(s) par le capteur biométrique 10 du jeton matériel 1, mais pas forcément. Le gabarit biométrique de référence peut en effet avoir été généré par un autre équipement ou le jeton matériel 1, à partir d'une ou plusieurs image(s) biométrique(s) acquise(s) par un autre dispositif, typiquement l'autre équipement, puis transmises au jeton matériel 1 via son interface de communication 16.

Le gabarit biométrique de référence est appelé « template » en anglais. La génération d'un gabarit biométrique à partir d'une ou plusieurs image(s) biométrique(s) est connue de l'état de la technique.

La mémoire 12 stocke également un programme de sauvegarde et/ou un programme de récupération comprenant des instructions de code exécutable par le processeur.

Le processeur 14 du jeton matériel 1 est configuré pour exécuter le ou chaque programme. Cette exécution cause la mise en œuvre d'étapes d'un procédé de sauvegarde et/ou d'un procédé de récupération qui seront décrits plus loin.

L'interface de communication 16 est propre à communiquer avec le terminal 2. L'interface de communication 16 peut comprendre un port propre à être connecté électriquement avec un port du terminal 2, ou avec un port d'un dispositif d'interconnexion destiné à interconnecter le jeton matériel 1 et le terminal 2. Alternativement ou à titre complémentaire, l'interface de communication 16 comprend une puce ou antenne pour établir un canal de communication radio sans fil avec le terminal 2 (NFC ou Bluetooth par exemple).

Dans un mode de réalisation, le jeton matériel 1 est une carte à puce.

## 1.2) Terminal

Le terminal 2 comprend une première interface de communication 20 pour communiquer avec le jeton matériel 1, une mémoire 22, un processeur 24, une interface homme-machine 26, et, optionnellement, une deuxième interface de communication 28 pour communiquer avec le serveur 3.

La première interface de communication 20 est propre à communiquer avec l'interface de communication du jeton matériel 1 (par contact électrique et/ou par des ondes radio, NFC par exemple). Lorsque le jeton matériel 1 est une carte à puce, le terminal 2 peut comprendre une fente dans laquelle la carte à puce peut être insérée pour établir un contact électrique entre le port de jeton matériel 1 et un port du terminal 2. Dans un autre mode de réalisation, les interfaces de communications 16 et 20 ne sont pas du même type, mais un dispositif d'interconnexion peut être utilisé pour les interconnecter. Le dispositif d'interconnexion peut comprendre un premier port propre à être relié électriquement à l'interface de communication 16 et un deuxième port propre à être électriquement relié à l'interface de communication 20. Par exemple, lorsque le jeton matériel est une carte à puce, le dispositif d'interconnexion comprend une fente dans laquelle la carte peut s'insérer pour établir une connexion avec le premier port, et le deuxième port est un port USB.

La mémoire 22 stocke également une application comprenant des instructions de code exécutable par le processeur 24.

Le processeur 24 est configuré pour exécuter l'application. Cette exécution cause la mise en œuvre d'étapes qui seront décrites plus loin.

L'interface homme-machine 26 comprend un périphérique de sortie, typiquement un écran d'affichage, pour restituer des informations à un utilisateur.

L'interface homme-machine 26 comprend en outre un périphérique d'entrée permettant à un utilisateur du terminal 2 de détecter des actions utilisateurs susceptibles d'être traitées par l'application au cours de son exécution. Par exemple, le périphérique d'entrée est ou comprend un élément sensible au toucher, formant un écran tactile avec l'écran d'affichage.

Le terminal 2 est par exemple un smartphone ou un ordinateur portable générique, personnalisé avec le programme précité.

La deuxième interface de communication 28 peut être identique ou différente de la première interface de communication 20. La deuxième interface est de type quelconque, filaire (Ethernet) ou radio sans fil (cellulaire, Wi-Fi, etc.).

## 1.3) Serveur 3

Le serveur 3 est un composant optionnel du système. Le serveur 3 comprend une interface de communication 30, une mémoire 32 et un processeur 34.

L'interface de communication 30 est propre à communiquer avec la deuxième interface de communication du terminal 2.

La mémoire stocke un programme comprenant des instructions de code exécutable par le processeur 34.

Le processeur 34 est configuré pour exécuter le programme. Cette exécution cause la mise en œuvre d'étapes qui seront décrites plus loin en section 4).

## 2) Procédés de sauvegarde et de récupération d'un secret - premier mode de réalisation

On va à présent décrire un procédé de sauvegarde du secret et un procédé de récupération du secret, selon un mode de réalisation.

## 2.1) Sauvegarde du secret

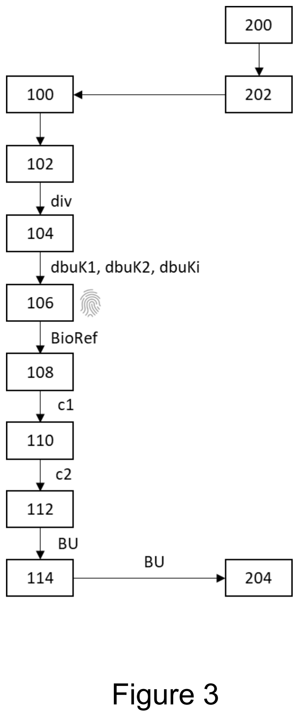

En référence à la figure 3, le procédé de sauvegarde selon le premier mode de réalisation comprend les étapes suivantes. Sauf mention explicite contraire, les étapes décrites dans la suite sont mises en œuvre ou causées par les processeurs 14, 24.

On suppose que le secret *seed* a été mémorisé dans la mémoire 12 lors d'une phase préalable de configuration du jeton matériel 1, connue de l'état de la technique.

On suppose également que l'individu de référence a en sa possession le jeton matériel 1 ainsi que le terminal 2. Il est le détenteur légitime des actifs numériques associés au secret *seed.*

Dans une étape 200, le terminal 2 détecte que l'individu de référence demande la réalisation d'une sauvegarde du secret mémorisé dans le jeton matériel 1. Par exemple, cette demande est réalisée grâce à un bouton ou un menu dédié de l'application, affiché sur l'écran d'affichage du terminal 2, et sur lequel l'individu de référence a appuyé.

Dans une étape 202, le terminal 2 envoie au jeton matériel 1 une demande de sauvegarde du secret. La demande est transmise via un canal de communication préalablement établi entre l'interface de communication 16 du jeton matériel 1 et la première interface de communication 20 du terminal 2.

Dans une étape 100, le jeton matériel 1 reçoit la demande de sauvegarde via son interface de communication 16 ; la demande de sauvegarde est transmise au processeur 14.

Dans une étape 102, le jeton matériel 1 génère un aléa, noté *div* dans la suite. L'aléa est une valeur aléatoire ou pseudo aléatoire ayant vocation à changer à chaque nouvelle mise en œuvre de cette étape.

Dans une étape 104 de diversification, le processeur génère des clés *dbuk*1, *dbuk*2 et *dbuKi* à partir des données maître *buK* mémorisées dans la mémoire. Dans la suite, on discutera d'un mode de réalisation dans lequel les données maître comprennent trois clés maître distinctes, notées *buK*1, *buK*2 et *buKi.* Toutefois, on gardera à l'esprit que les données maître *buK* peuvent être constituées d'une clé maître, autrement dit que *buK* = *buK*1 = *buK*2 = *buKi.*Plus précisément, *dbuK1* est une clé de chiffrement générée par le processeur 14 à partir de la clé maître *buK*1 et de l'aléa *div.* En fait, cette génération est une opération de diversification de la clé maître *buK*1 à l'aide de l'aléa *div* qui joue le rôle d'un diversifiant.

On peut donc écrire :

$$dbuK1 = Diversify(buK1, div)$$

où *Diversify* est une fonction cryptographique de diversification.

Par ailleurs, *dbuK2* est une clé de chiffrement, différente de *dbuK1,* générée par le processeur 14 à partir de la clé maître *buK*2 et de l'aléa *div.* Cette génération est une opération de diversification de la clé maître *buK*2 à l'aide de l'aléa *div.*

On peut donc écrire :

$$dbuK2 = Diversify(buK2, div)$$

En outre, *dbuKi* est une clé d'authentification, différente de *dbuK1* et de *dbuK2,* générée par le processeur 14 à partir de la clé maître *buKi* et de l'aléa *div.* Cette génération est une opération de diversification de la clé maître *buKi* à l'aide de l'aléa *div.*

On peut donc écrire :

$$dbuKi = Diversify(buKi, div)$$

Les diversifications qui précèdent permettent de faire varier les clés utilisées pour différentes sauvegardes successives opérées par le jeton matériel 1, sans pour autant consommer beaucoup de mémoire puisque toutes les clés générées sont obtenues à partir des données *buK.* Cette variation améliore le niveau de confidentialité de la sauvegarde.

Dans le mode de réalisation discuté ci-dessus, la même fonction de diversification *Diversify* et le même aléa *div* sont utilisés pour produire les clés *dbuK*1, *dbuK*2 et *dbuKi.* Mais dans d'autres modes de réalisation, des fonctions de diversification différentes et/ou des aléas différents peuvent être utilisés.

Par ailleurs, dans le cas où les données maîtres sont constituées d'une seule clé maître (*buK* = *buK*1 = *buK*2 = *buKi),* alors on peut se retrouver dans l'une des situations suivantes :

- *dbuK*1 et *dbuK*2 sont la même clé ; voire

- *dbuK*1*, dbuK*2 et *dbuKi* sont la même clé (dans ce cas, on peut utiliser une fonction de chiffrement authentifié, telle que GCM ou CCM).

Dans une étape 106, le jeton matériel 1 lit le gabarit biométrique *BioRef* se rapportant à l'individu de référence, qui est stocké dans sa mémoire 12.

Dans une étape 108 de chiffrement, le processeur 14 chiffre le gabarit biométrique de référence *BioRef* à l'aide de la clé de chiffrement *dbuK1,* produisant ainsi un premier chiffré *c*1. Cette opération peut s'écrire :

$$c1 = Enc(dbuK1, BioRef)$$

où *Enc* désigne une fonction cryptographique de chiffrement.

Par ailleurs, dans une étape 110 de chiffrement, le processeur 14 chiffre le secret *seed* à l'aide de la clé de chiffrement *dbuK*2*,* produisant ainsi un deuxième chiffré *c*2. Cette opération peut s'écrire :

$$c2 = Enc(dbuK2, seed)$$

Dans le mode de réalisation discuté ci-dessus, la même fonction de chiffrement *Enc* est utilisée dans les deux chiffrements. Dans d'autres modes de réalisation, des fonctions de chiffrement différentes pourraient être utilisées pour chiffrer le secret et le gabarit biométrique de référence.

Ces chiffrements 108, 110 peuvent être des chiffrements symétriques, auquel cas les clés de chiffrement *dbuK*1, *dbuK*2 utilisées constituent alors également des clés de déchiffrement.

Les chiffrements 108, 110 peuvent être mis en œuvre dans un ordre quelconque.

Dans une étape 112, le processeur 14 génère une sauvegarde, notée BU, à partir du premier chiffré *c*1 et du deuxième chiffré *c*2.

La sauvegarde BU comprend par ailleurs un code d'authentification M utilisable pour contrôler une intégrité de la sauvegarde, en particulier vérifier que la sauvegarde telle que générée par le jeton matériel 1 n'a subi aucune modification, après une transmission par exemple.

La génération 112 de la sauvegarde BU peut comprendre par exemple une concaténation entre les données suivantes : le premier chiffré *c*1, le deuxième chiffré *c*2, chaque aléa utilisé (ici l'aléa *div*) et le code d'authentification *M.* Dans ce cas, la sauvegarde BU peut être le résultat de cette concaténation, ou bien une donnée obtenue à partir de cette concaténation. Une telle donnée est par exemple représentative d'un code-barres à deux dimensions, tel un QR code ; cette donnée est obtenue par un encodage connu de l'état de la technique, pouvant être appliqué au résultat de concaténation susmentionné.

On remarquera que l'utilisation d'un seul aléa

23

*div* pour diversifier les données maître *buK,* conformément au mode de réalisation exposé précédemment, permet de réduire avantageusement la taille de la sauvegarde, comparativement à des solutions utilisant plusieurs aléas diversifiants.

Dans une étape 114, le jeton matériel 1 envoie la sauvegarde BU au terminal 2.

Dans une étape 204, le terminal 2 reçoit la sauvegarde BU.

Le terminal 2 peut alors stocker cette sauvegarde dans sa mémoire 22, ou bien la transmettre à un dispositif de stockage tiers.

## 2.2) Récupération du secret

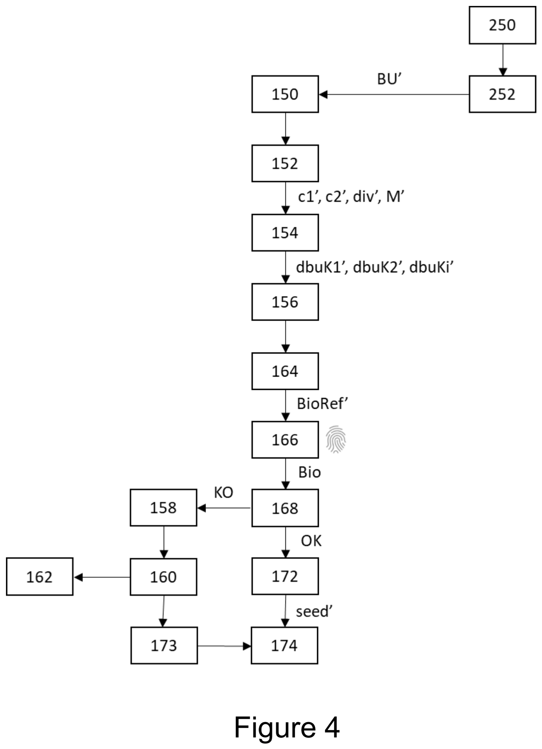

On va maintenant décrire un procédé de récupération d'un secret *seed'* antérieurement sauvegardé via le procédé décrit ci-dessus en section 2.1, en référence à la figure 4.

Il est à noter que la sauvegarde et la récupération sont des procédés qui sont mis en œuvre à des moments différents, et qui peuvent être réalisés par le même jeton matériel 1, ou bien par des jetons matériels différents. En particulier, un utilisateur peut avoir réalisé une sauvegarde du secret *seed* qui était mémorisé dans un premier jeton matériel 1, puis se retrouver dans une situation où il a besoin qu'un deuxième jeton matériel 1 différent du premier jeton matériel 1 récupère le secret *seed,* par exemple en raison d'une perte ou d'un vol du premier jeton matériel 1.

Dans ce qui suit, on va supposer que le procédé de récupération est mis en œuvre par le jeton matériel 1 sur la base d'une sauvegarde *BU'* accessible par le terminal 2 (soit parce que cette sauvegarde est mémorisée dans la mémoire du terminal 2, soit parce que le terminal 2 est apte à récupérer la sauvegarde stockée par un dispositif tiers).

Dans une situation normale, la sauvegarde *BU'* est la sauvegarde *BU,* résultant du procédé de sauvegarde décrit précédemment. Toutefois, dans une situation anormale, la sauvegarde *BU'* résulte d'une altération de la sauvegarde *BU,* et il convient de prendre en considération cette éventualité au cours du procédé de récupération.

Dans une étape 250, l'application détecte qu'un individu, que l'on appelle par convention « individu d'épreuve », demande la réalisation d'une récupération d'un secret *seed'* sur la base de la sauvegarde *BU'* dans le jeton matériel 1. Par exemple, cette demande est réalisée grâce à un bouton ou un menu dédié de l'application, affiché sur l'écran d'affichage, et sur lequel l'individu d'épreuve a appuyé.

Dans une étape 252, le terminal 2 envoie au jeton matériel 1 une demande de récupération assortie de la sauvegarde *BU',* en passant par un canal de communication préalablement établi entre l'interface de communication 16 du jeton matériel 1 et la première interface de communication 20 du terminal 2.

Dans une étape 150, le jeton matériel 1 reçoit la demande de récupération et la sauvegarde *BU'.*

Dans une étape 152, le processeur 14 extrait de la sauvegarde *BU'* : un premier chiffré *c*1', un deuxième chiffré *c*2', un aléa *div'* et un code d'authentification *M'.* L'extraction est une opération réciproque de l'étape de génération de sauvegarde 112 telle que discutée précédemment. Dans ces conditions, si l'on suppose que la sauvegarde faisant l'objet de l'extraction est bien identique la sauvegarde *BU* générée à l'étape 112, alors le processeur va retrouver le premier chiffré *c*1, le deuxième chiffré *c*2, l'aléa *div* et le code d'authentification M générés au cours du procédé de sauvegarde.

Dans une étape 154, le processeur 14 génère une première clé de déchiffrement *dbuK*1' pour déchiffrer le premier chiffré à partir de la clé maître *buK*1, une deuxième clé de déchiffrement *dbuK*2' pour déchiffrer le deuxième chiffré à partir de la clé maître *buK*2, et une clé d'authentification *dbuKi'* pour contrôler l'intégrité de la sauvegarde *BU'.*

Ces clés sont générées de la même façon que lors de l'étape 104 du procédé de sauvegarde. On a ainsi :

$$dbuK1' = Diversify(buK1, div')$$

$$dbuK2' = Diversify(buK2, div')$$

$$dbuKi' = Diversify(buKi, div')$$

Ainsi, les clés maîtres utilisées lors de la sauvegarde sont réutilisées lors de la récupération, mais l'aléa *div'* impliqué dans la récupération est celui extrait de la sauvegarde *BU'.*

Dans une étape 156, le processeur contrôle l'intégrité de la sauvegarde *BU'* à l'aide du code d'authentification *M'* et de la clé *dbuKi'.* Le contrôle d'intégrité mis en œuvre est connu de l'état de la technique. Le résultat de ce contrôle d'intégrité est mémorisé par le jeton matériel ; ce résultat est positif lorsque la sauvegarde *BU'* est considérée intègre, et négatif lorsque la sauvegarde *BU'* est considérée non-intègre.

Dans l'étape 164, le processeur déchiffre le premier chiffré *c*1' à l'aide de la première clé de déchiffrement *dbuK*1*',* le résultat de ce déchiffrement étant interprété par le jeton matériel 1 comme un gabarit biométrique *BioRef',* que l'on appelle par convention « gabarit biométrique sauvegardé ». La fonction de déchiffrement utilisée est une fonction réciproque de la fonction de chiffrement utilisée pour chiffrer un gabarit biométrique au cours de la sauvegarde.

Dans une étape 166 d'acquisition, le capteur biométrique 10 acquiert un gabarit biométrique d'épreuve *Bio* se rapportant à l'individu d'épreuve. Par exemple, l'application invite l'individu d'épreuve à poser son doigt sur le capteur biométrique 10 dans un message affiché sur l'écran d'affichage du terminal 2, de sorte que cette étape d'acquisition ait lieu. Le capteur biométrique 10 acquiert alors une image d'épreuve se rapportant à l'individu d'épreuve, et le jeton matériel génère un gabarit biométrique d'épreuve à partir de l'image biométrique d'épreuve.

Dans une étape 168, le processeur 14 vérifie si le gabarit biométrique sauvegardé *BioRef'* et le gabarit biométrique d'épreuve *Bio* correspondent. Cette vérification vise à estimer si les deux gabarits se rapportent ou non au même individu. Cette vérification est connue de l'état de la technique.

Si le gabarit biométrique sauvegardé *BioRef'* et le gabarit biométrique d'épreuve *Bio* correspondent et si de plus le résultat du contrôle d'intégrité est positif (cas « OK »), alors le processeur déchiffre dans une étape 172 le deuxième chiffré *c2'* à l'aide de la deuxième clé de déchiffrement *dbuK2',* le résultat de ce déchiffrement étant interprété par le jeton matériel 1 comme un secret *seed'* prouvant une possession d'actifs numériques.

Ensuite, le processeur 14 cause une mémorisation du secret *seed'* dans la mémoire 12 du jeton matériel 1 (étape 174).

A l'opposé, si le gabarit biométrique sauvegardé *BioRef'* et le gabarit biométrique d'épreuve *Bio* ne correspondent pas ou si le résultat de contrôle d'intégrité est négatif (cas « NOK »), alors le processeur 14 incrémente un compteur d'erreurs de récupération dans la mémoire du jeton matériel 1 (étape 158), puis compare le compteur avec un seuil prédéfini N (étape 160). N est un entier supérieur ou égal à 1.

Si le compteur est égal au seuil N, alors le processeur cause un blocage du jeton matériel 1, de sorte à empêcher toute utilisation du jeton matériel 1 dans un transfert d'actifs numériques (étape 162). Autrement dit, si le compteur est égal au seuil N, alors le processeur cause un blocage du jeton matériel 1, de sorte à empêcher toute récupération de secret dans ce jeton matériel 1. On se trouve en effet dans une situation où N erreurs ont été détectées, ce qui est interprété comme une situation dans laquelle le jeton matériel 1 fait l'objet d'attaques.

Si le compteur n'est pas égal au seuil N, alors le procédé passe à l'étape 173 pendant laquelle le jeton matériel génère un secret *seed'* factice, par exemple de manière aléatoire. Ce secret, erroné, ne permettra pas de réaliser des transactions. Ceci offre un compromis entre sécurité et expérience utilisateur.

Ensuite, le processeur 14 cause une mémorisation du secret *seed'* dans la mémoire 12 du jeton matériel 1 (étape 174).

Les étapes décrites précédemment peuvent être mises en œuvre dans des ordres différents. En particulier, l'étape d'acquisition 166 pourrait être réalisée avant le contrôle d'intégrité 156, voire avant l'étape de génération des clés, mais il peut être plus avantageux de la réaliser après le contrôle d'intégrité 156 à des fins d'économie de traitement (en cas de blocage du jeton matériel 1 ou en cas d'arrêt du procédé de récupération sur détection d'absence d'intégrité, l'acquisition serait réalisée en pure perte).

Le mode de réalisation qui a été décrit ci-dessus est un mode de réalisation symétrique. En effet, si l'on suppose que *BU = BU'* (autrement dit : la sauvegarde traitée lors du procédé de récupération est bien le résultat d'une mise en œuvre du procédé de sauvegarde décrit en section 2.1), alors les clés utilisées lors de la récupération sont les mêmes que les clés utilisées lors de la sauvegarde antérieure :

$$dbuK1' = dbuK1$$

$$dbuK2' = dbuK2$$

$$dbuKi' = dbuKi$$

### 3) Procédé de sauvegarde et de récupération du secret - deuxième mode de réalisation

Un procédé de sauvegarde et un procédé de récupération selon un deuxième mode de réalisation diffèrent des procédés décrits en section 2 par les caractéristiques suivantes.

Au cours du procédé de sauvegarde, le jeton matériel 1 reçoit un code PIN saisi par l'individu de référence, typiquement via l'interface de saisie du terminal 2. Le code PIN intervient dans la génération d'au moins une des clés *dbuK1, dbuK2, dbuKi* impliquées dans la sauvegarde. Le code PIN peut être reçu en même temps que la demande de sauvegarde à l'étape 100, ou bien lors d'une étape différente.

Au cours du procédé de récupération, le jeton matériel 1 reçoit un code PIN d'épreuve saisi par l'individu d'épreuve, typiquement via l'interface de saisie du terminal 2. Le code PIN d'épreuve, noté *PIN',* peut être reçu à l'étape 150 ou bien lors d'une étape différente. Le code *PIN'* intervient dans la génération d'au moins une des clés *dbuK1', dbuK2', dbuKi'* impliquées dans la récupération.

L'incorporation du code PIN améliore la sécurité de ces procédés. En effet, le code PIN utilisé lors de la sauvegarde est une information supplémentaire que doit connaître un attaquant pour espérer hacker le système.

Par exemple, dans une variante particulière de ce deuxième mode de réalisation, les traitements suivants de diversification peuvent être modifiés comme suit.

Au stade de la sauvegarde :

$$dbuK2 = Diversify(buK2, div + PIN)$$

Au stade de la récupération :

$$dbuK2' = Diversify(buK2, div' + PIN')$$

L'emploi du code PIN amplifie la diversification opérée pour obtenir la deuxième clé de chiffrement *buK2* utilisée pour chiffrer le secret.

**4) Procédé de sauvegarde et de récupération de secret - troisième mode de réalisation**

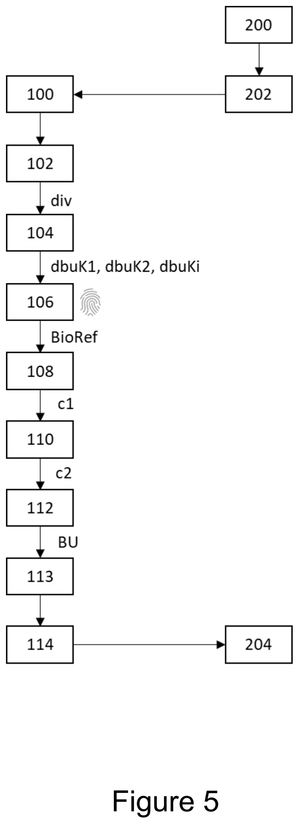

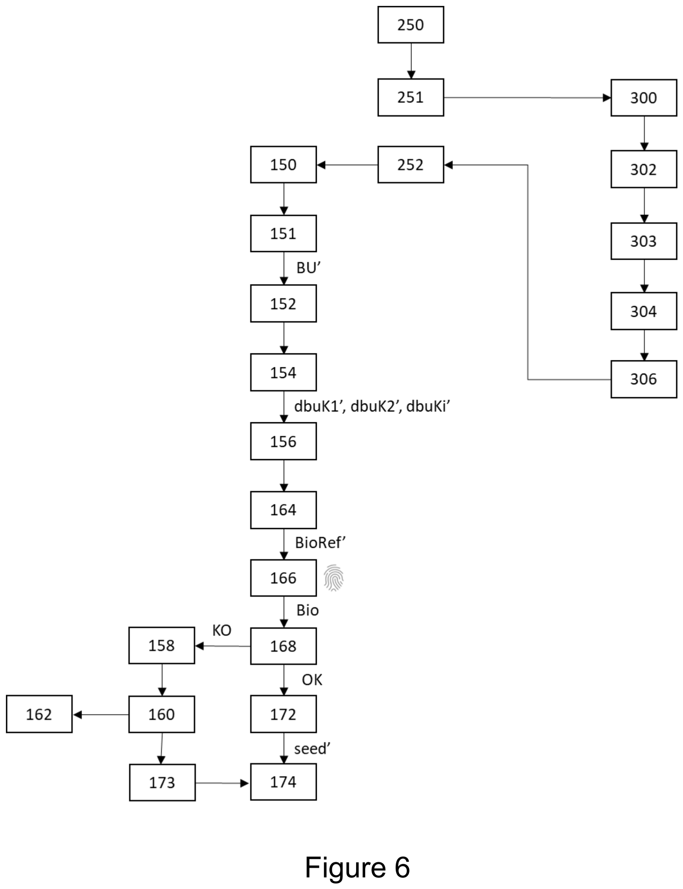

Un procédé de sauvegarde (illustré dans la figure 5) et un procédé de récupération (illustré dans la figure 6) selon un troisième mode de réalisation utilisent le serveur 3 en sus du jeton matériel 1 et du terminal 2.

Deux paires de clés asymétriques sont utilisées en sus des clés mentionnées précédemment, afin de sécuriser des données échangées entre le jeton matériel 1 et le serveur 3 via le terminal 2 :

- une paire de clés (*skW, pkW*) propre au jeton matériel 1, comprenant une clé privée *skW* mémorisée par le jeton matériel 1 (et inconnue de tout autre dispositif), et une clé publique *pkW* que le serveur 3 connaît.
- une paire de clés (*skS, pkS*) propres au serveur 3, comprenant une clé privée *skS* mémorisée par le serveur 3 (et inconnue de tout autre dispositif) et une clé publique *pkS* que le jeton matériel 1 *pkS* connaît.

Le serveur 3 peut avoir accès à une base de de données *idW, pkW* se rapportant à une flotte de jetons matériels, où les *idW* sont des identifiants respectifs des jetons matériels. Cette base de données est alimentée au fur et à mesure de la production de jetons matériels. Dans ce cas, le serveur 3 récupère la clé publique *pkW* qui est associé à l'identifiant *idW* du jeton matériel 1 dans la base de données.

Alternativement à une telle base de données, un certificat (par exemple de type x509) est généré et mémorisé dans le jeton matériel 1 lors de sa production. Le certificat établit un lien entre la clé publique *pkW* et l'identifiant *idW* propre au jeton matériel. A l'aide de ce certificat, le serveur 3 peut vérifier que la clé *pkW* est bien la clé publique du jeton associé à l'identifiant *idW.*

La clé *pkS* peut-être écrite dans le jeton matériel 1 lors de sa production. Alternativement, elle pourrait être envoyée au jeton matériel via un certificat.

Lors de la sauvegarde, le processeur 14 du jeton matériel 1 chiffre la sauvegarde BU à l'aide de la clé publique du serveur 3 *pkS,* de sorte à obtenir une sauvegarde sous forme chiffrée (étape 113). C'est sous cette forme chiffrée que la sauvegarde BU est envoyée au terminal 2 à l'étape 114.

Lors de la récupération, les étapes additionnelles suivantes sont mises en œuvre.

Après avoir détecté une demande de récupération (étape 250), le terminal 2 envoie au serveur 3 une demande en récupération comprenant la sauvegarde sous sa forme chiffrée ainsi qu'un identifiant du jeton matériel 1 (ou le certificat susmentionné), dans une étape 251. Le terminal 2 peut interroger le jeton matériel 1 en vue d'obtenir cet identifiant (ou ce certificat).

Le serveur 3 est mis à contribution en réalisant les étapes suivantes.

Dans une étape 300, le serveur 3 reçoit la requête en récupération et la sauvegarde sous forme chiffrée.

Dans une étape 302, le serveur 3 déchiffre la sauvegarde sous forme chiffrée à l'aide de sa clé privée *skS,* de sorte à récupérer la sauvegarde BU.

Dans une étape 304, le serveur 3 chiffre à nouveau la sauvegarde BU, mais cette fois avec la clé publique *pkW* du jeton matériel 1, obtenant ainsi une sauvegarde sous forme rechiffrée.

Dans une étape 306, le serveur 3 envoie la sauvegarde sous forme rechiffrée au terminal 2.

Au cours de l'étape 252, c'est la sauvegarde sous forme rechiffrée qui est envoyée par le terminal 2 au jeton matériel 1, après avoir été reçue par le terminal 2.

Côté jeton matériel 1, le processeur 14 met en œuvre une étape 151 de déchiffrement de la sauvegarde sous forme rechiffrée, et ce à l'aide de sa clé privée *skW,* ce qui permet au jeton matériel 1 de récupérer la sauvegarde *BU'*. Les autres étapes de traitement décrites précédemment peuvent ensuite être mise en œuvre par le jeton matériel 1 sur la base de la sauvegarde *BU'*.

Les caractéristiques additionnelles qui précèdent ont différents avantages.

Premièrement, ces caractéristiques apportent une couche de sécurité additionnelle, puisqu'un attaquant devra obtenir au moins une des clés privées *skW* et *skS* pour essayer d'obtenir le secret correspondant à une sauvegarde.

Deuxièmement, solliciter le serveur 3 allonge la durée totale du procédé de récupération, ce qui permet d'assurer une protection plus efficace contre des attaques par force brute, qui consisteraient à réaliser de très nombreux essais de récupération sur la base de gabarits biométriques d'épreuve différents pour la même sauvegarde *BU'*.

De plus, le procédé de récupération de ce mode de réalisation peut comprendre en outre une étape supplémentaire de contrôle de validité de la requête en récupération mise en œuvre par le serveur 3 (étape 303).

Au cours de ce contrôle de validité 303, le serveur 3 incrémente un compteur de requêtes associé en propre à la sauvegarde sous forme chiffrée, puis vérifie si le compteur de requêtes a atteint un seuil représentant un nombre maximal de requêtes admissibles.

Si le seuil n'est pas atteint, le serveur 3 applique l'étape de re-chiffrement discutée précédemment.

Si le seuil est atteint, le serveur 3 ne met pas en œuvre l'étape de re-chiffrement, et peut à la place retourner un message d'erreur au terminal 2, si bien que le procédé de récupération n'est pas mené à son terme.

L'étape 303 permet ainsi de mieux protéger le système contre des attaques par force brute, car un attaquant ne pourra pas réaliser des essais répétés en grande nombre, notamment par utilisation de plusieurs jetons matériels 1.

## 5) Autres aspects / autres modes de réalisation et variantes

Le procédé de récupération peut être ralenti artificiellement par une autre méthode que via une sollicitation du serveur 3 : via une étape de traitement factice, réalisée par le jeton matériel 1. Cette étape de traitement factice ne modifie en rien la sortie du procédé de récupération, mais dure un certain nombre de cycles processeur.

Bien qu'avantageux, le code d'authentification est optionnel. La sauvegarde BU peut donc être dépourvue de code d'authentification.

Dans les modes de réalisations exposés ci-dessus, le procédé de sauvegarde chiffre séparément le gabarit biométrique de référence *BioRef* et le secret *seed,* et le procédé de récupération réalise deux déchiffrements pour obtenir le gabarit sauvegardé *BioRef'* et le secret *seed'.* Dans d'autres modes de réalisation, le procédé de sauvegarde pourrait chiffrer le gabarit biométrique de référence *BioRef* et le secret *seed* dans une seule étape de chiffrement, et le procédé de récupération pourrait réaliser un seul déchiffrement pour obtenir le gabarit sauvegardé *BioRef'* et le secret *seed'.*

Par ailleurs, il a été envisagé plus haut qu'une absence d'intégrité (« KO ») détectée lors de l'étape 160 n'interrompt pas forcément le procédé de récupération, ce procédé pouvant aboutir même à un secret factice ; ainsi l'individu d'épreuve n'est pas alerté d'une quelconque erreur au cours du procédé de récupération (sauf dans le cas précis où le compteur d'erreur est arrivé à son maximum N). Dans d'autres modes de réalisation, le procédé de récupération peut s'arrêter, ou le dispositif signataire être bloqué quoi qu'il arrive sur détection d'absence d'intégrité.

Par ailleurs, on a vu précédemment que le déchiffrement du secret (étape 172) pouvait être réalisé sous conditions. En variante, il peut être prévu d'appliquer ces conditions à l'étape ultérieure de mémorisation du secret *seed'* généré dans la mémoire (12). Autrement dit :

- si le gabarit biométrique sauvegardé *BioRef'* et le gabarit biométrique d'épreuve *Bio* correspondent et si le résultat de contrôle d'intégrité est OK, alors le processeur du jeton matériel 1 cause la mémorisation du secret *seed'* dans la mémoire 12, qui est non-volatile.
- si le gabarit biométrique sauvegardé *BioRef'* et le gabarit biométrique d'épreuve *Bio* ne correspondent pas ou si le résultat de contrôle d'intégrité est NOK, alors le processeur du jeton matériel 1 ne cause pas de mémorisation du secret *seed'* dans une quelconque mémoire non-volatile du jeton matériel 1. Le secret *seed'* obtenu par déchiffrement n'est alors stocké que de façon temporaire dans une mémoire volatile du jeton matériel 1 ou un registre du processeur 14, et sera perdu dès que le jeton matériel 1 sera mis hors tension.

L'utilisation d'aléa(s) est également avantageuse pour la sécurité des procédés de sauvegarde et de récupération, mais reste optionnelle. Le jeton matériel pourrait se borner à utiliser les mêmes clés de chiffrement/déchiffrement sans les diversifier. Une seule clé (diversifiée ou pas) peut même être utilisée pour tout chiffrer lors du procédé de sauvegarde. Par ailleurs, il est possible d'utiliser des compteurs en guise de diversifiants à la place d'aléas.

Dans le troisième mode de réalisation faisant appel au serveur 3, les deux paires de clés asymétriques peuvent être remplacées par des clés symétriques. Ainsi, il peut être prévu que $skW = pkW$ (la même clé est utilisée côté jeton matériel 1 pour chiffrer et côté serveur 3 pour déchiffrer) et/ou que $skS = pkS$ (la même clé est utilisée côté serveur 3 pour chiffrer et côté jeton matériel 1 pour déchiffrer).

## Revendications

1. Procédé de sauvegarde d'un secret (seed) mémorisé par un jeton matériel tel qu'une carte à puce, le secret permettant de prouver une possession d'actifs numériques, le procédé comprenant les étapes suivantes mises en œuvre par le jeton matériel :

   • chiffrement (108) d'un gabarit biométrique de référence mémorisé par le jeton matériel se rapportant à un individu de référence et du secret, de sorte à produire des données chiffrées (c1, c2),
   • génération (112) d'une sauvegarde (BU) à partir des données chiffrées,
   • envoi (114) de la sauvegarde à un dispositif distinct du jeton matériel.

2. Procédé selon la revendication précédente, comprenant des étapes de:

   • chiffrement (108) du gabarit biométrique de référence de sorte à produire un premier chiffré (c1),
   • chiffrement (110) du secret (seed) de sorte à produire un deuxième chiffré (c2), et génération (112) de la sauvegarde (BU) à partir du premier chiffré (c1) et du deuxième chiffré (c2).

3. Procédé selon la revendication précédente, dans lequel

   • le chiffrement du gabarit biométrique est réalisée à l'aide d'une première clé de chiffrement, et

• le chiffrement du secret est réalisé à l'aide d'une deuxième clé de chiffrement différente de la première clé de chiffrement.

4. Procédé selon la revendication précédente, dans lequel :

• la première clé de chiffrement est générée par le jeton matériel à partir d'une première clé maître et à partir d'un premier diversifiant,
• la deuxième clé de chiffrement est générée par le jeton matériel à partir d'une deuxième clé maître et à partir d'un deuxième diversifiant, et
• chaque diversifiant est inclus dans la sauvegarde.

5. Procédé selon la revendication précédente, dans lequel :

• la deuxième clé maître est différente de la première clé maître, et
• le premier diversifiant et le deuxième diversifiant sont un seul et même diversifiant inclus dans la sauvegarde.

6. Procédé selon l'une quelconque des revendications 3 à 5, dans lequel au moins une clé parmi la première clé de chiffrement et la deuxième clé de chiffrement est générée à partir d'un code PIN saisi par l'individu de référence.

7. Procédé selon l'une quelconque des précédentes, dans lequel la sauvegarde comprend un code d'authentification généré à partir des données chiffrées, le code d'authentification étant utilisable pour contrôler une intégrité de la sauvegarde.

8. Procédé selon la revendication précédente dans sa dépendance la revendication 3, dans lequel le code d'authentification est généré à l'aide d'une clé d'authentification différente de la première clé de chiffrement et de la deuxième clé de chiffrement.

9. Procédé selon la revendication précédente, dans lequel

• la clé d'authentification est générée à l'aide d'une clé maître du jeton matériel et à partir d'un diversifiant d'authentification,
• le diversifiant d'authentification est inclus dans la sauvegarde.

10. Procédé selon la revendication précédente dans sa dépendance à l'une quelconque des revendications 4 et 6, dans lequel :

• le premier diversifiant et le diversifiant d'authentification sont un seul et même diversifiant inclus dans la sauvegarde, ou
• le deuxième diversifiant et le diversifiant d'authentification sont un seul et même diversifiant inclus dans la sauvegarde.

11. Procédé selon l'une quelconque des revendications précédentes, dans lequel la sauvegarde est encodée sous la forme d'un code-barres bidimensionnel.

12. Procédé de récupération d'un secret (*seed'*) permettant de prouver une possession d'actifs numériques, le procédé comprenant les étapes suivantes mise en œuvre par un jeton matériel tel qu'une carte à puce :

• réception (150) d'une sauvegarde (*BU'*) émanant d'un dispositif distinct du jeton matériel,
• déchiffrement (164, 172) de la sauvegarde, de sorte à récupérer un gabarit biométrique sauvegardé (*BioRef'*) et le secret (*seed'*),
• acquisition (166) d'un gabarit biométrique d'épreuve (*Bio*) par un capteur biométrique du jeton matériel, le gabarit biométrique d'épreuve se rapportant à un individu,
• vérification (168) de correspondance entre le gabarit biométrique sauvegardé (*BioRef'*) et le gabarit biométrique d'épreuve (*Bio*),
• mémorisation du secret (*seed'*) dans une mémoire du jeton matériel,
• dans lequel le déchiffrement du secret ou la mémorisation du secret est réalisé à condition que la vérification révèle que le gabarit sauvegardé et le gabarit biométrique d'épreuve correspondent.

13. Procédé selon la revendication précédente, comprenant les étapes suivantes :

• déchiffrement (164) d'un premier chiffré extrait de la sauvegarde, de sorte à récupérer le gabarit biométrique sauvegardé (*BioRef'*),
• déchiffrement (172) d'un deuxième chiffré extrait de la sauvegarde de sorte à récupérer le secret, dans lequel le déchiffrement du deuxième chiffré est réalisé à condition que la vérification révèle que le gabarit sauvegardé et le gabarit biométrique d'épreuve correspondent.

14. Procédé selon la revendication précédente, dans lequel

• le déchiffrement du premier chiffré est réalisé à l'aide d'une première clé de déchiffrement,
• le déchiffrement du deuxième chiffré est réalisé à l'aide d'une deuxième clé de déchiffrement différente de la première clé de déchiffrement.

15. Procédé selon la revendication précédente, dans lequel :

• la première clé de déchiffrement est générée par le jeton matériel à partir d'une première clé maître et à partir d'un premier diversifiant extrait de la sauvegarde,
• la deuxième clé de chiffrement est générée par le jeton matériel à partir d'une deuxième clé maître et à partir d'un deuxième diversifiant extrait de la sauvegarde.

16. Procédé selon la revendication précédente, dans lequel :

• la deuxième clé maître est différente de la première clé maître, et
• le deuxième diversifiant et le premier diversifiant sont un seul et même diversifiant présent dans la sauvegarde.

17. Procédé selon l'une quelconque des revendications 14 à 16, dans lequel au moins une clé parmi la première clé de déchiffrement et la deuxième clé de déchiffrement est générée à partir d'un code PIN d'épreuve saisi par l'individu.

18. Procédé selon l'une quelconque des 12 à 17, comprenant en outre des étapes de

• contrôle d'intégrité de la sauvegarde à partir d'un code d'authentification extrait de la sauvegarde,
• blocage du jeton matériel à condition que le contrôle d'intégrité révèle que la sauvegarde n'est pas intègre, le blocage empêchant tout transfert des actifs numériques à l'aide du jeton matériel.

19. Procédé selon la revendication précédente dans sa dépendance la revendication 14, dans lequel le contrôle d'intégrité est mis en œuvre à l'aide d'une clé d'authentification différente de la première clé de déchiffrement et de la deuxième clé de déchiffrement.

20. Procédé selon la revendication précédente, dans lequel

• la clé d'authentification est générée par le jeton matériel à l'aide d'une clé maître mémorisée par le jeton matériel et à partir d'un diversifiant d'authentification extrait de la sauvegarde.

21. Procédé selon la revendication précédente dans sa dépendance à l'une quelconque des revendications 15 à 17, dans lequel

• le premier diversifiant et le diversifiant d'authentification sont un seul et même diversifiant présent dans la sauvegarde, ou
• le deuxième diversifiant et le diversifiant d'authentification sont un seul et même diversifiant présent dans la sauvegarde.

22. Procédé selon l'une quelconque des revendications 12 à 21, comprenant

• un traitement factice pour retarder la récupération du secret.

23. Procédé selon l'une quelconque des revendications 12 à 22, comprenant en outre :

• les étapes suivantes mises en œuvre par un serveur :

• recevoir une sauvegarde sous une forme chiffrée à l'aide d'une clé publique propre au serveur,
• déchiffrer la sauvegarde sous la forme chiffrée à l'aide d'une clé privée propre au serveur, de sorte à obtenir la sauvegarde,
• à l'aide d'une clé publique propre au jeton matériel, rechiffrer la sauvegarde obtenue à l'issue du déchiffrement réalisé à l'aide de la clé privée propre au serveur, de sorte à obtenir la sauvegarde sous une forme rechiffrée, la sauvegarde reçue par le jeton matériel étant la sauvegarde sous la forme rechiffrée,

• l'étape suivante mise en œuvre par le jeton matériel :

• déchiffrer la sauvegarde sous la forme rechiffrée à l'aide d'une clé privée propre au jeton matériel, avant que le jeton matériel ne déchiffre la sauvegarde de sorte à récupérer le gabarit biométrique sauvegardé *(BioRef')* et le secret (*seed'*).

24. Procédé comprenant :

• une sauvegarde d'un secret mémorisé par un premier jeton matériel via le procédé selon l'une quelconque des revendications 1 à 11, le secret permettant de prouver une possession d'actifs numériques,
• une récupération du secret par un deuxième jeton matériel via le procédé selon l'une quelconque des revendications 12 à 23.

25. Produit programme d'ordinateur comprenant des instructions de code de programme pour l'exécution des étapes du procédé selon l'une des revendications précédentes, lorsque ce programme est exécuté par au moins un processeur.

26. Jeton matériel (1), tel qu'une carte à puce, comprenant :

> • une mémoire propre à mémoriser un secret permettant de prouver une possession d'actifs numériques,
> • une interface de communication pour communiquer avec un dispositif distinct du jeton matériel,
> • au moins un processeur configuré pour sauvegarder le secret via le procédé selon l'une quelconque des revendications 1 à 11, et/ou récupérer le secret via le procédé selon l'une quelconque des revendications 12 à 23.

Figure 1

Figure 2

Figure 3

Figure 4

Figure 5

Figure 6

Europäisches Patentamt
European Patent Office
Office européen des brevets

**RAPPORT DE RECHERCHE EUROPEENNE**

Numéro de la demande

EP 25 21 5277

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2020/193420 A1 (VOGEL HENRY MICHAEL [US] ET AL) 18 juin 2020 (2020-06-18) | 1,2, 7-13, 18-26 | INV. H04L9/08 H04L9/32 |
| Y | * alinéas [0004] - [0005], [0029], [0053], [0064] - [0068], [0073], [0087], [0093], [0123] - [0126]; figures 1,4 * | 3-6, 14-17 | H04L9/00 G06F21/32 G06F21/34 |
| | ----- | | |
| X | WO 2023/009294 A1 (VISA INT SERVICE ASS [US]) 2 février 2023 (2023-02-02) * alinéas [0002], [0004], [0019], [0028] * | 1-26 | |
| | ----- | | |
| X | CN 108 665 250 A (BEIJING CHENGXIN DIGITAL SCIENCE AND TECH CO LTD) 16 octobre 2018 (2018-10-16) * alinéas [0010], [0012], [0046] - [0047], [0059] - [0063], [0068] * | 1-26 | |
| | ----- | | |
| Y | US 2024/364512 A1 (OSBORN KEVIN [US] ET AL) 31 octobre 2024 (2024-10-31) * alinéas [0056] - [0057], [0047] * | 3-6, 14-17 | |
| | ----- | | |

**DOMAINES TECHNIQUES RECHERCHES (IPC)**

G06F
H04L

Le présent rapport a été établi pour toutes les revendications

| Lieu de la recherche | Date d'achèvement de la recherche | Examinateur |
|---|---|---|
| Munich | 31 mars 2026 | Veillas, Erik |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..............................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 25 21 5277

31-03-2026

| Document brevet cité au rapport de recherche | Date de publication | Membre(s) de la famille de brevet(s) | Date de publication |
|---|---|---|---|
| US 2020193420 A1 | 18-06-2020 | AUCUN | |
| WO 2023009294 A1 | 02-02-2023 | US 2023050481 A1 | 16-02-2023 |
| | | WO 2023009294 A1 | 02-02-2023 |
| CN 108665250 A | 16-10-2018 | AUCUN | |
| US 2024364512 A1 | 31-10-2024 | AU 2022415183 A1 | 20-06-2024 |
| | | CA 3239475 A1 | 22-06-2023 |
| | | CN 118556246 A | 27-08-2024 |
| | | EP 4449331 A1 | 23-10-2024 |
| | | JP 2025500248 A | 09-01-2025 |
| | | KR 20240124913 A | 19-08-2024 |
| | | US 2023188340 A1 | 15-06-2023 |
| | | US 2024364512 A1 | 31-10-2024 |
| | | US 20260012342 A1 | 08-01-2026 |
| | | WO 2023113986 A1 | 22-06-2023 |

EPO FORM P0460